# EUROPEAN PATENT SPECIFICATION

(11) **EP 0 447 003 B1**
(45) Date of publication and mention of the grant of the patent: **29.11.1995**
(21) Application number: 91200543.6
(22) Date of filing: 12.03.1991
(51) Int. Cl.: A22C 7/00

(54) **Device for dosing into moulds**
Vorrichtung zum Dosieren in Formen
Dispositif pour le dosage en formes

(30) Priority: 12.03.1990 NL 9000566
(43) Date of publication of application: 18.09.1991
(73) Proprietor: STORK TITAN B.V., 5831 AV Boxmeer (NL)
(72) Inventor: Kusters, Johannes Karel Oda, NL-5491 GN St. Oedenrode (NL); Van der Putten, Joost Adrianus Wilhelmus Helena, NL-5735 AP Aarle Rixtel (NL)
(74) Representative: Hoorweg, Petrus Nicolaas

(56) References cited:
- EP-A- 0 004 156
- EP-A- 0 218 790
- BE-A- 749 279
- DE-A- 2 123 906
- DE-A- 2 638 003
- NL-A- 7 300 937
- NL-A- 7 609 907
- NL-A- 7 906 962
- US-A- 2 413 046
- US-A- 3 121 449
- US-A- 3 203 037
- US-A- 3 964 127
- US-A- 4 126 704

## Description

The present invention relates to a device for dosing a perishable plastic mass, comprising:
- a feed vessel;
- positioning means for positioning at least one container in which the mass is to be dosed;
- a channel connecting the feed vessel with the positioning means;
- a valve arranged in the channel and rotable around an axis extending within the channel, in the opened positon, the valve being countersunk in one of the walls of the channel.

Such a device is known from DE-A-2638003.

The valve used in the apparatus disclosed in said document comprises discs which are journalled in the walls of the channel. This has been caused by the limited space available in said construction. Further, the valve of said construction only has to withstand limited pressures, as the pressure is switched off, before the valve is closed.

The aim of the present invention is to provide a device which is fit for dosing material under a substantial pressure, and thus comprising a valve, which is able to withstand such substantial pressures.

This aim is reached in that the valve comprises on either side a shaft stump, lying mutually in line and journalled in either side wall of the channel, that the positioning means comprise a mould chamber in which a mould can be located for filling with the mass, and that a pressing chamber, in which a piston is movable, is connected with the channel downstream of the valve.

This construction allows the filling of the plastic mass in the containers under a substantial pressure. Further, the rigid construction of the valve allows it to be driven by a shaft stump which is driven at the outside of the channel by means of a lever and a lineair driving element.

Further, it is noted that from NL-A-7906962 a similar apparatus is known which is fit to withstand substantial forces. However, in this prior art apparatus, the axis of the valve extends outside the channel, so that for driving said valves a substantial force is required, as the valve itself has to travel a substantial path within the channel, and displacing a substantial part of the mass to be dosed.

Further, from US-A-3964127 a shaping machine is known, wherein a valve of a similar construction as with the present invention is used; however, the construction of said machine is much different, and the valve is under constant pressure, as the channel, in which it is mounted, has a constant pressure of plastic perishable mass. Further, this known construction has an abandonance of so-called dead spaces, so that the danger of a bacterial growth is substantially.

In US-A-3203037 a dosing device is shown in which a valve is used, of which the axis is also within the channel in which the valve is applied. However, this valve cannot be countersunk into one of the valves of said channel, and further the channel has a different function; it is more or less a bypass channel and the main stream of the plastic perishable mass does not pass through said channel.

The present invention will now be elucidated with reference to the annexed drawings, in which:
Fig. 1 shows a partially broken away perspective view of a device according to the present invention;
fig. 2 shows a sectional view of the device depicted in fig. 1, wherein the valve is in the opened position; and
fig. 3 shows a sectional view of the device shown in fig. 1 with the valve in the closed position.

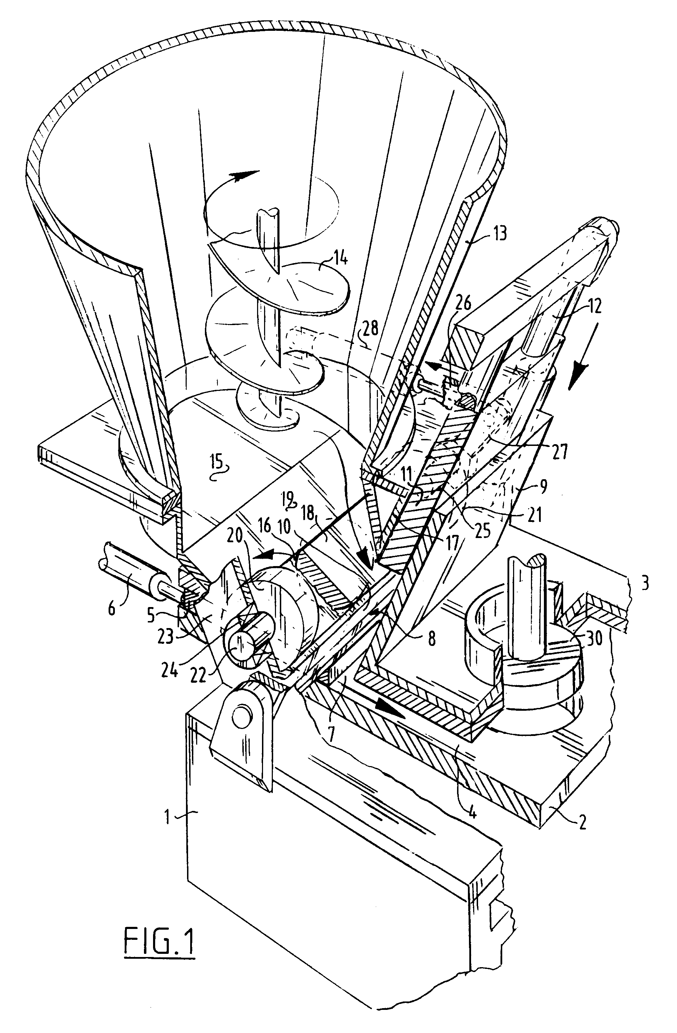

The device shown in fig. 1 is formed by a frame 1 onto which is fixed a plate 2. A top plate 3 is fixed at some distance above the bottom plate 2 so that a mould chamber 4 is created therebetween. In the mould chamber 4 a mould plate 5 is movable in the lengthwise direction by means of a pneumatic or hydraulic cylinder 6. A mould hole 7 is arranged in the mould plate 5. A pressing chamber 8 bounded by the respective plates 9, 10 is arranged connecting onto the mould chamber 4. A piston 11 is movable in the pressing chamber 8 likewise by means of a hydraulic or pneumatic cylinder 12.

Further arranged is a feed hopper 13 in which a drivable transport screw 14 is fixed by means of bearings (not shown in the drawing). The underside of the feed hopper is connected to the top plate 3. Formed between the feed hopper 14 and the pressing chamber 8 is a channel 16 that is bounded on the top by a wall 17 and on the bottom by a valve 18, which forms the subject of the present invention.

The valve 18 has in section the shape of a circle segment. The bottom wall 19 of the channel 16 otherwise has shape such that in the closed position the valve 18 sinks entirely into the wall. The valve 18 is connected on either side to a rotatable disc 20 and 21. On the side of the disc 20 this is further connected to a shaft stump 22 which is mounted in a side wall 23 by means of a bearing 24. Arranged on the side of the disc 21 is a shaft stump, wherein both shaft stumps 22, 25 lie mutually in line. The shaft stump 25 is mounted in a side wall 26. The shaft stump 25 is further provided with a lever 27 which is movable by means of a hydraulic or pneumatic cylinder 28.

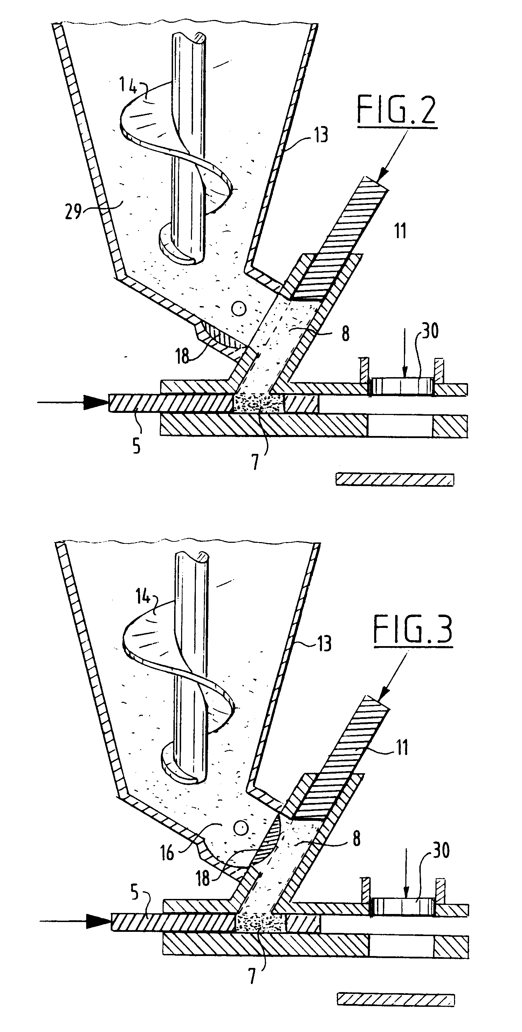

The operation of the device according to the present invention will be further described with reference to fig. 2 and 3.

Present in the feed hopper 13 is a quantity of meat mass 29 which is moved downward by the transport screw 14 and the force of gravity. When the valve 18 is opened, as shown in fig. 2, the meat mass will be pressed through the channel 16 into the pressing chamber 8. Since the channel 16 is entirely provided with smooth, seamless walls the whole of the meat mass will fall into the pressing chamber and no remnants will be left behind.

Thereafter the valve 18 is closed by being turned to the position shown in fig. 3 by means of the hydraulic cylinder 28, the lever 27, the shaft stump 25 and the disc 21. The valve is provided with a sharp edge which moves easily through the meat mass present in the channel. The meat mass is hardly cut or crushed therein, so that no separation or structure change occurs and the quality of the meat mass is not affected.

The piston 11 is then moved downward by the hydraulic cylinder, so that the meat mass present in the pressing chamber is pressed into the mould hole 7 in the mould plate 5. The mould plate 5 is subsequently moved to its ejecting position wherein the mould plate is emptied by pushing out a piston. The mould plate thereafter moves back again to its original position so that an empty mould hole 7 is present under the pressing chamber. The piston 11 is simultaneously returned to its starting position and the valve is rotated back again to its original countersunk position for supply of a new quantity of meat mass. Since the other edge of the valve is also sharp, this edge valve will be able to move through the meat mass present in the channel without problem.

The cycle is then repeated.

In order to increase the production capacity a number of such machines can be placed operating in parallel. It is then possible to allow the movements of the components of the various machines to take place simultaneously and for example to embody the mould plate as a common plate and to provide it with a number of mould holes equal to the number of machines operating in parallel.

The present invention is elucidated above with reference to a machine for dosing a meat mass, although it is also applicable to machines for dosing for example soya bean pastes.

## Claims

1. Device for dozing a perishable plastic mass (29), comprising:
- a feed vessel (13);
- positioning means (4) for positioning at least one container (5) in which the mass (29) is to be dosed;
- a channel (16) connecting the feed vessel (13) with the positioning means (4);
- a valve (18) arranged in the channel (16) and rotable around an axis extending within the channel (16), in the opened positon, the valve being countersunk in one of the walls of the channel;
**characterized** in:
- that the valve (18) comprises on either side a shaft stump (22, 25) lying mutually in line and journalled in either side wall (23,26) of the channel (16),
- that the positioning means comprise a mould chamber (4) in which a mould (5) can be located for filling with the mass (29), and
- that a pressing chamber (8), in which a piston (11) is movable, is connected with the channel (16) downstream of the valve (18).

2. Device according to claim 1, **characterized in that** the valve (18) is connected with two discs (20,21), each of the discs (20,21) being connected with one of the shaft stumps (22,25).

3. Device as claimed in claim 1 or 2, **characterized** in that the valve (18) is provided with a sharp edge on the leading side in the direction of movement.

4. Device as claimed in claim 1, 2 or 3, **characterized** in that in section the valve (18) has the shape of a circle segment.

5. Device as claimed in any of the foregoing claims, **characterized** in that the mould chamber (4) is formed by a channel, in which a plate (5) provided with at least one mould hole (7) is close-fittingly movable.

6. Device as claimed in any of the foregoing claims, **characterized** in that the dimensions of the mould hole (7) correspond with those of a standard hamburger.

7. Device as claimed in any of the foregoing claims, **characterized** in that the channel (16) forms an entity with the feed vessel (13).

8. Device formed by a combination of a number of devices as claimed in any of the foregoing claims, **characterized** in
- that one plate (5) is arranged for all the devices which is provided with a number of holes (7) corresponding with the number of devices, and
- that the valves (16) and the pistons (11) of the device are controlled such, that they operate simultaneously.

## Patentansprüche

1. Vorrichtung zum Dosieren einer leichtverderblichen plastischen Masse (29), mit
- einem Zuführgefäß (13);
- einer Positioniereinrichtung (4) zum Positionieren mindestens eines Behälters (5) in den die Masse (29) dosiert werden soll;
- einem Kanal (16), der das Zuführgefäß (13) mit der Positioniereinrichtung (4) verbindet;
- einem Drehschieber (18), der in dem Kanal (16) angeordnet und um eine in dem Kanal (16) verlaufende Achse in die geöffnete Stellung drehbar ist, wobei der Drehschieber in einer der Wände des Kanals versenkt angeordnet ist;
dadurch **gekennzeichnet**
- daß der Drehschieber (18) auf beiden Seiten je einen Wellenstummel (22,25) aufweist, die miteinander fluchtend liegen und in der jeweiligen Seitenwand (23,26) des Kanals (16) drehbar gelagert sind,
- daß die Positioniereinrichtung eine Formkammer (4) aufweist, in der eine Form (5) angeordnet werden kann, um mit der Masse (29) gefüllt zu werden, und
- daß eine Druckkammer (8), in der ein Kolben (11) bewegbar ist, mit dem Kanal (16) stromabwärts des Drehschiebers (18) verbunden ist.

2. Vorrichtung nach Anspruch 1, dadurch **gekennzeichnet,** daß der Drehschieber (18) mit zwei Scheiben (20,21) verbunden ist, von denen jede mit einem der Wellenstümpfe (22,25) verbunden ist.

3. Vorrichtung nach Anspruch 1 oder 2, dadurch **gekennzeichnet,** daß der Drehschieber (18) mit einer scharfen Kante an seiner in Bewegungsrichtung vorne liegenden Seite versehen ist.

4. Vorrichtung nach Anspruch 1, 2 oder 3, dadurch **gekennzeichnet,** daß der Drehschieber (18) im Querschnitt die Form eines Kreissegmentes hat.

5. Vorrichtung nach einem der vorangehenden Ansprüche, dadurch **gekennzeichnet,** daß die Formkammer (4) durch einen Kanal gebildet ist, in der eine mit mindestens einer Formöffnung (7) versehene Platte (5) dichtanliegend bewegbar ist.

6. Vorrichtung nach einem der vorangehenden Ansprüche, dadurch **gekennzeichnet,** daß die Abmessungen der Formöffnung (7) denen eines normalen Hamburgers entsprechen.

7. Vorrichtung nach einem der vorangehenden Ansprüche, dadurch **gekennzeichnet,** daß der Kanal (16) mit dem Zuführgefäß (13) eine Einheit bildet.

8. Vorrichtung, die durch Kombination einer Anzahl von Vorrichtungen gemäß einem der vorangehenden Ansprüche gebildet ist, dadurch **gekennzeichnet**
- daß eine einzige Platte (5) für sämtliche Vorrichtungen vorgesehen ist, die mit einer Anzahl von Öffnungen (7) versehen ist, die der Anzahl von Vorrichtungen entspricht, und
- daß die Drehschieber (16) und die Kolben (11) der Vorrichtungen so gesteuert sind, daß sie gleichzeitig arbeiten.

## Revendications

1. Dispositif pour le dosage d'une masse plastique périssable (29), comprenant :
une cuve d'introduction (13) ;
des moyens de positionnement (4) pour positionner au moins un conteneur (5) dans lequel la masse (29) doit être dosée ;
un canal (16) reliant la cuve d'introduction (13) aux moyens de positionnement (4) ;
une vanne (18) montée rotative dans le canal (16) autour d'un axe s'étendant à l'intérieur du canal, la vanne étant rentrée dans l'une des parois du canal quand elle est en position ouverte ;
caractérisé en ce que :
la vanne (18) comprend de chaque côté un tronçon d'arbre (22, 25), les deux tronçons d'arbre étant alignés entre eux et tourillonnés dans l'une ou l'autre des parois latérales (23, 26) du canal (16), les moyens de positionnement comprenant une chambre de moulage (4) dans laquelle peut être placé un moule (5) destiné à être rempli par la masse (29), et
une chambre de compression (8), dans laquelle un piston (11) se déplace, est reliée au canal (16) en aval de la vanne (18).

2. Dispositif selon la revendication 1, caractérisé en ce que la vanne (16) est connectée à deux disques (20, 21), reliés chacun à l'un des tronçons d'arbre (22, 25).

3. Dispositif selon l'une quelconque des revendications 1 ou 2, caractérisé en ce que la vanne (18) comporte un bord tranchant sur sa face avant dans la direction du mouvement.

4. Dispositif selon l'une quelconque des revendications 1, 2 ou 3, caractérisé en ce que la section de la vanne (18) a la forme d'un segment circulaire.

5. Dispositif selon l'une quelconque des revendications précédentes, caractérisé en ce que la chambre de moulage (4) est formée par un canal dans lequel une plaque (5) présentant au moins un orifice de moulage (7) est ajustée mobile.

6. Dispositif selon l'une quelconque des revendications précédentes, caractérisé en ce que les dimensions de l'orifice de moulage (7) correspondent à celles d'un "hamburger" standard.

7. Dispositif selon l'une quelconque des revendications précédentes, caractérisé en ce que le canal (16) forme une seule pièce avec le récipient d'introduction (13).

8. Dispositif constitué par une combinaison d'un certain nombre de dispositifs selon l'une quelconque des revendications précédentes, caractérisé en ce que :
cette unique plaque (5) est prévue pour tous les dispositifs et comporte un nombre d'orifices (7) correspondant au nombre des dispositifs, et
les vannes (16) et les pistons (11) des dispositifs sont commandés de manière à fonctionner simultanément.
